# EUROPEAN PATENT APPLICATION

(11) **EP 4 715 938 A1**
(43) Date of publication of application: **25.03.2026**
(21) Application number: 24823782.8
(22) Date of filing: 17.05.2024
(51) Int. Cl.: H01M 10/0567, H01M 10/052

(54) **NON-AQUEOUS ELECTROLYTE SOLUTION AND LITHIUM SECONDARY BATTERY COMPRISING SAME**

(30) Priority: 13.06.2023 KR 20230075638
(71) Applicant: SK On Co., Ltd., Seoul 03161 (KR); SK innovation Co., Ltd., Seoul 03188 (KR)
(72) Inventor: SHIM, Yu Na, Daejeon 34124 (KR); JEON, Hyun Ji, Daejeon 34124 (KR)
(74) Representative: Prüfer & Partner mbB Patentanwälte · Rechtsanwälte
(86) International application number: PCT/KR2024/095803
(87) International publication number: WO 2024/258266

(57) **Abstract**

Embodiments of the present invention provide a non-aqueous electrolyte and a lithium secondary battery including the same. The non-aqueous electrolyte includes a non-aqueous organic solvent, a lithium salt, and an additive including a sulfonyl compound containing a sulfonyl group and two phosphorus atoms within one molecule.

## Description

### [Technical Field]

Embodiments of the present invention relate to a non-aqueous electrolyte and a lithium secondary battery including the same.

### [Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles or hybrid vehicles.

Among the secondary batteries, lithium secondary batteries have been actively developed and applied due to their high operating voltage, high energy density per unit weight, and advantages in charging speed and weight reduction.

The lithium secondary battery may include: an electrode assembly including a cathode and an anode; and an electrolyte that impregnates the electrode assembly. The lithium secondary battery may further include, for example, an outer case that accommodates the electrode assembly and the electrolyte.

A lithium metal oxide may be used as a cathode active material of the lithium secondary battery. An example of such lithium metal oxide may include a nickel-based lithium metal oxide.

As the application range of lithium secondary batteries expands, longer cycle life, higher capacity, and improved operational stability are required. Accordingly, lithium secondary batteries that provide consistent output and capacity even during repeated charge and discharge cycles are preferred.

However, the cycle life characteristics may deteriorate due to side reactions between the cathode active material and the electrolyte.

### [Summary of Invention]

### [Problems to be Solved by Invention]

An object of the present invention is to provide a non-aqueous electrolyte capable of imparting enhanced mechanical and chemical stability.

Another object of the present invention is to provide a lithium secondary battery including the non-aqueous electrolyte and having improved operational stability and electrochemical characteristics.

### [Means for Solving Problems]

In exemplary embodiments, a non-aqueous electrolyte includes: a non-aqueous organic solvent; a lithium salt; and an additive including a sulfonyl compound containing a sulfonyl group and two phosphorus atoms within one molecule.

In some embodiments, the sulfonyl compound may include at least one selected from the group consisting of compounds represented by Formula 1 below.

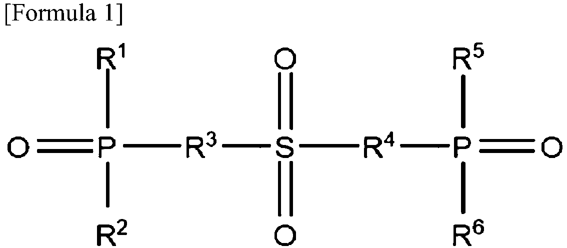

In Formula 1, R¹, R², R⁵ and R⁶ may each independently be a C₆-C₁₂ aryl group, a C₆-C₁₂ heteroaryl group, a phenoxy group, a heterophenoxy group, a C₁-C₆ alkyl group, a C₁-C₆ heteroalkyl group, a C₁-C₆ alkoxy group, a C₁-C₆ heteroalkoxy group, a C₅-C₁₂ cycloalkyl group, a C₅-C₁₂ cycloalkenyl group, a 5- to 7-membered heterocycloalkyl group, or a 5- to 7-membered heterocycloalkenyl group, and R³ and R⁴ may each independently be a C₁-C₆ alkyl group, a C₂-C₆ alkenyl group, or a C₂-C₆ alkynyl group.

In some embodiments, the sulfonyl compound may include a compound represented by Formula 2 below.

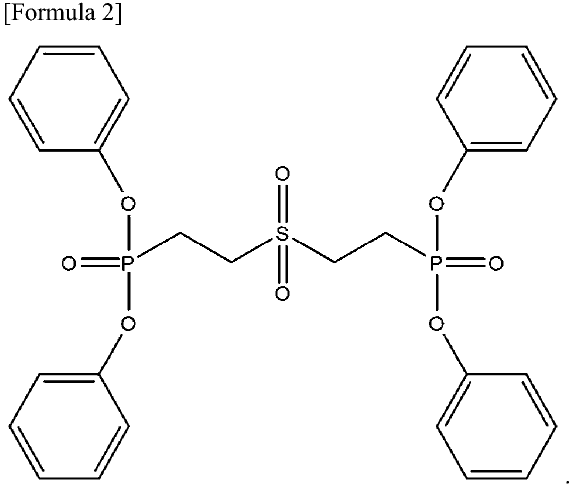

In some embodiments, the sulfonyl compound may include a compound represented by Formula 3 below.

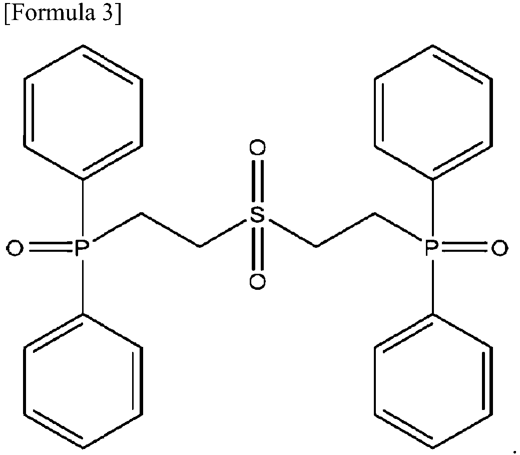

In some embodiments, the content of the additive based on the total weight of the non-aqueous electrolyte may be 0.1% by weight to 5.0% by weight.

In some embodiments, the content of the additive based on the total weight of the non-aqueous electrolyte may be 0.3% by weight to 0.8% by weight.

In some embodiments, the non-aqueous electrolyte may further include an auxiliary additive including an alkyl sultone compound.

In some embodiments, the content of the auxiliary additive based on the total weight of the non-aqueous electrolyte may be 2% by weight to 4% by weight.

In some embodiments, the non-aqueous organic solvent may include at least one selected from the group consisting of ethylene carbonate, ethyl methyl carbonate, dimethyl carbonate, and diethyl carbonate.

In some embodiments, the lithium salt may include at least one selected from the group consisting of lithium tetrafluoroborate (LiBF₄), lithium hexafluorophosphate (LiPF₆), lithium bis(fluorosulfonyl)imide (LiFSI), and lithium bis(trifluoromethanesulfonyl)imide (LiTFSI).

A lithium secondary battery according to exemplary embodiments of the present disclosure includes a cathode, an anode disposed opposite the cathode, and the above-described non-aqueous electrolyte.

### [Advantageous effects]

According to an embodiment of the present disclosure, the initial capacity characteristics of the secondary battery including the non-aqueous electrolyte may be improved.

According to an embodiment of the present disclosure, the thermal stability of the secondary battery may be improved.

According to an embodiment of the present disclosure, the high-temperature storage characteristics and cycle life characteristics of the secondary battery may be enhanced.

The non-aqueous electrolyte of the present disclosure and the lithium secondary battery including the same may be widely applied in green technology fields, such as electric vehicles, battery charging stations, as well as solar power generation, wind power generation, and the like, which use the batteries. The non-aqueous electrolyte of the present disclosure and the lithium secondary battery including the same may be used in eco-friendly electric vehicles, electric vehicles, hybrid vehicles, and the like, which are aimed at mitigating climate change by reducing air pollution and greenhouse gas emissions.

### [Brief Description of Drawings]

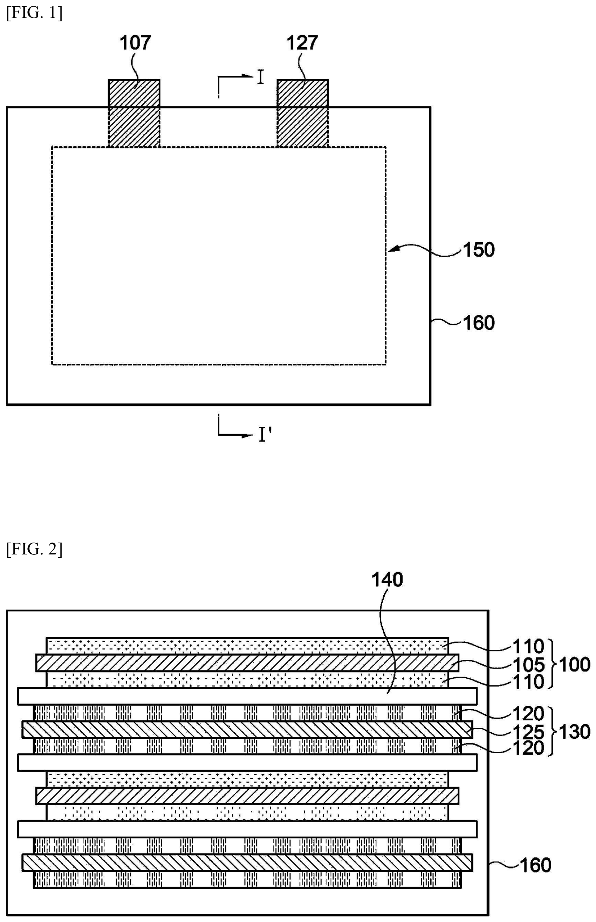

FIGS. 1 and 2 are schematic plan and cross-sectional views, respectively, illustrating a lithium secondary battery according to exemplary embodiments.

### [Mode for Carrying out Invention]

Embodiments of the present invention provide a non-aqueous electrolyte including an organic solvent, a lithium salt, and an additive. In addition, a lithium secondary battery including the non-aqueous electrolyte is provided.

In exemplary embodiments, the non-aqueous electrolyte includes a non-aqueous organic solvent, a lithium salt, and an additive.

For example, the non-aqueous organic solvent may include an organic compound that has sufficient solubility for the lithium salt and additive, and is electrochemically stable without exhibiting reactivity in the lithium secondary battery.

In exemplary embodiments, the non-aqueous organic solvent may include a carbonate solvent, an ester solvent, an ether solvent, a ketone solvent, an alcohol solvent, an aprotic solvent, and the like. These may be used alone or in combination of two or more thereof.

For example, the carbonate solvent may include at least one selected from the group consisting of dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC), fluoroethylene carbonate (FEC), and butylene carbonate.

For example, the ester solvent may include at least one selected from the group consisting of methyl acetate (MA), ethyl acetate (EA), n-propyl acetate (n-PA), 1,1-dimethylethyl acetate (DMEA), methyl propionate (MP), ethyl propionate (EP), γ-butyrolactone (GBL), decanolide, valerolactone, mevalonolactone, and caprolactone.

For example, the ether solvent may include at least one selected from the group consisting of dibutyl ether, tetraethylene glycol dimethyl ether (TEGDME), diethylene glycol dimethyl ether (DEGDME), dimethoxyethane, tetrahydrofuran (THF), and 2-methyltetrahydrofuran.

For example, the ketone solvent may include cyclohexanone, and the like.

For example, the alcohol solvent may include at least one selected from the group consisting of ethyl alcohol and isopropyl alcohol.

For example, the aprotic solvent may include at least one selected from the group consisting of a nitrile solvent, an amide solvent (e.g., dimethylformamide), a dioxolane solvent (e.g., 1,3-dioxolane), and a sulfolane solvent.

In some embodiments, the carbonate solvent may include at least one selected from the group consisting of ethylene carbonate (EC), ethyl methyl carbonate (EMC), dimethyl carbonate (DMC), and diethyl carbonate (DEC).

In exemplary embodiments, a lithium salt may be provided as the electrolyte. For example, the lithium salt may be represented as Li⁺X⁻.

For example, the anion (X⁻) of the lithium salt may be F⁻, Cl⁻, Br⁻, I⁻, NO₃⁻, N(CN)₂⁻, BF₄⁻, ClO₄⁻, PF₆⁻, SbF₆⁻, AsF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or PO₂F₂⁻₋. These may be provided alone or in combination as anions of the lithium salt.

In some embodiments, the lithium salt may include at least one selected from the group consisting of lithium tetrafluoroborate (LiBF₄), lithium hexafluorophosphate (LiPF₆), lithium bis(fluorosulfonyl)imide (LiFSI), and lithium bis(trifluoromethanesulfonyl)imide (LiTFSI). In this case, a film with improved thermal stability may be formed on the surface of the electrode. Accordingly, the ionic conductivity and electrode-protection properties of the non-aqueous electrolyte may be improved.

In one embodiment, the lithium salt may be included in the non-aqueous organic solvent at a concentration of about 0.01 M to 5 M, preferably about 0.01 M to 2 M. Within this range, the transfer of lithium ions and/or electrons during charge and discharge of the lithium secondary battery may be promoted, thereby improving the capacity characteristics.

In exemplary embodiments, the additive includes a sulfonyl compound containing a sulfonyl group and two phosphorus (P) atoms within one molecule. Accordingly, the initial performance, high-temperature storage characteristics, and high-temperature cycle life characteristics of a lithium secondary battery including the non-aqueous electrolyte may be improved.

For example, a lithium secondary battery may experience an increase in thickness due to swelling during high-temperature storage or high-temperature charge and discharge. This may reduce the durability and stability of the lithium secondary battery.

According to exemplary embodiments of the present invention, the sulfonyl compound may promote the migration of lithium ions and/or electrons, thereby reducing resistance and improving the initial capacity characteristics. In addition, the sulfonyl compound may suppress side reactions between the non-aqueous organic solvent and the anode, thereby improving storage and cycle life characteristics at high temperatures.

In some embodiments, the sulfonyl compound may include at least one selected from the group consisting of compounds represented by Formula 1 below.

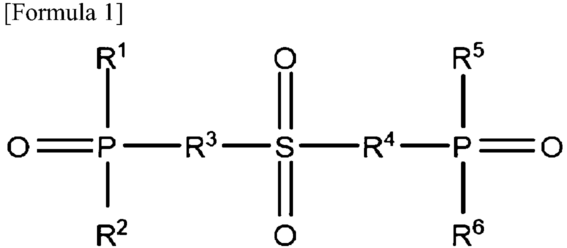

In Formula 1, R¹, R², R⁵ and R⁶ may each independently be a C₆-C₁₂ aryl group, a C₆-C₁₂ heteroaryl group, a phenoxy group, a heterophenoxy group, a C₁-C₆ alkyl group, a C₁-C₆ heteroalkyl group, a C₁-C₆ alkoxy group, a C₁-C₆ heteroalkoxy group, a C₅-C₁₂ cycloalkyl group, a C₅-C₁₂ cycloalkenyl group, a 5- to 7-membered heterocycloalkyl group, or a 5- to 7-membered heterocycloalkenyl group.

In Formula 1, R³ and R⁴ may each independently be a C₁-C₆ alkyl group, a C₂-C₆ alkenyl group, or a C₂-C₆ alkynyl group.

For example, R¹ to R⁶ may each be substituted or unsubstituted.

For example, the substituent included in R¹ to R⁶ may include at least one selected from the group consisting of a halogen, a C₁-C₆ alkyl group, a C₃-C₆ cycloalkyl group, a C₁-C₆ alkoxy group, a 3- to 7-membered heterocycloalkyl group, a C₆-C₁₂ aryl group, a 5- to 7-membered heteroaryl group, a hydroxy group (-OH), -NR⁵R⁶ (R⁵ and R⁶ are each independently hydrogen or a C₁-C₆ alkyl group), a nitro group (-NO₂), and a cyano group (-CN).

For example, the sulfonyl compound may include one sulfonyl group and two phosphorus atoms, as in Formula 1. Accordingly, the initial performance and high-temperature cycle life characteristics of the lithium secondary battery may be improved.

In one embodiment, the sulfonyl compound may include a compound represented by Formula 2 below.

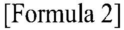

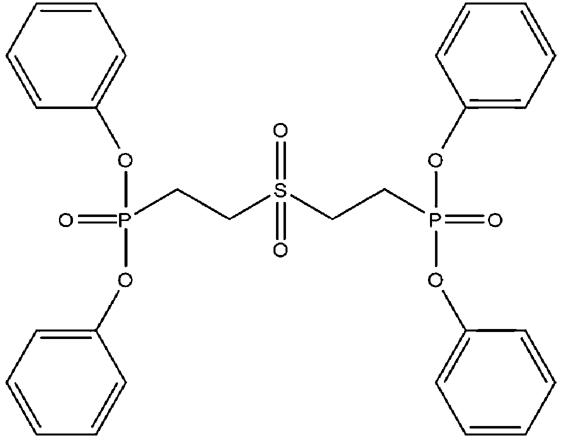

According to an embodiment, the sulfonyl compound may include a compound represented by Formula 3 below.

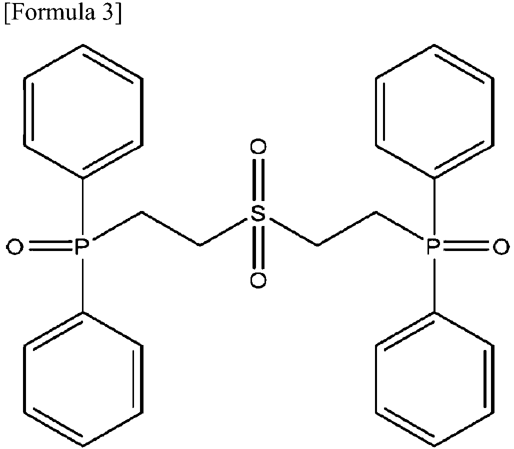

In some embodiments, the additive may include the compound represented by Formula 2 and the compound represented by Formula 3. Accordingly, the initial performance and high-temperature cycle life characteristics of the lithium secondary battery may be further improved.

In some embodiments, the content of the additive based on the total weight of the non-aqueous electrolyte may be 0.1% by weight ("wt%") to 5.0 wt%, preferably 0.3 wt% to 0.8 wt%. Within this range, the resistance of the lithium secondary battery may be reduced while sufficiently suppressing side reactions with the electrolyte.

In some embodiments, the non-aqueous electrolyte may further include an auxiliary additive including an alkyl sultone compound.

For example, the alkyl sultone compound may include at least one of 1,3-propane sultone (PS) and 1,4-butane sultone.

For example, the auxiliary additive may further include an anhydride compound such as succinic anhydride, maleic anhydride, etc., a nitrile compound such as glutaronitrile, succinic acid nitrile, adiponitrile, etc. These may be added alone or in combination of two or more, in addition to the above-described sultone compounds.

In some embodiments, the auxiliary additive may further include at least one selected from the group consisting of fluoroethylene carbonate (FEC), ethylene sulfate (ESA), polyethylene sulfide (PES), vinylene carbonate (VC), and vinylethylene carbonate (VEC).

In some embodiments, the content of the auxiliary additive based on the total weight of the non-aqueous electrolyte may be 2 wt% to 4 wt%. Within this range, the additive may sufficiently improve high-temperature storage characteristics and high-temperature cycle life characteristics while suppressing an increase in the resistance of the lithium secondary battery.

FIGS. 1 and 2 are schematic plan and cross-sectional views, respectively, illustrating a lithium secondary battery according to exemplary embodiments. For example, FIG. 2 is a cross-sectional view taken along line I-I' in FIG. 1.

The structures illustrated in FIGS. 1 and 2 are examples for the convenience of description, and the structure of the lithium secondary battery according to the embodiments of the present disclosure is not limited thereto.

Referring to FIGS. 1 and 2, the lithium secondary battery may include an electrode assembly including a cathode 100 and an anode 130 disposed opposite the cathode 100. The electrode assembly may be accommodated in a case 160 and impregnated with the above-described non-aqueous electrolyte.

The cathode 100 may include a cathode current collector 105 and a cathode active material layer 110 formed on the cathode current collector 105.

The cathode current collector 105 may include stainless steel, nickel, aluminum, titanium, or an alloy thereof. The cathode current collector 105 may include aluminum or stainless steel whose surface is treated with carbon, nickel, titanium, or silver. For example, the cathode current collector 105 may have a thickness of 10 µm to 50 µm.

The cathode active material layer 110 may include a cathode active material. The cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.5≤a≤0.99, 0.01≤b≤0.5, and - 0.5≤z≤0.1. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may serve as an auxiliary active element that contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the above-described auxiliary elements. In Formula 1-1, x, a, b1, b2 and z may satisfy 0.9≤x≤1.2, 0.5≤a≤0.99, 0.01≤b1+b2≤0.5, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of lithium-nickel metal oxide particles, or may penetrate through the surface of the lithium-nickel metal composite oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel (Ni) may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co while maintaining electrical conductivity, and Mn to improve cycle stability and capacity retention, both properties can be enhanced.

The content of Ni (e.g., the molar fraction of nickel based on the total molar amount of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., LiFePO₄).

In some embodiments, the cathode active material may include, for example, an Lirich layered oxide (LLO)/over-lithiated oxide (OLO)-based active material, an Mn-rich-based active material, or a Co-less active material, each having a chemical structure or a crystal structure represented by Formula 2. These may be used alone or in combination of two or more thereof.

[Formula 2] p[Li₂MnO₃]·(1-p)[Li_{q}JO₂]

In Formula 2, p and q may satisfy 0<p<1, and 0.9≤q≤1.2, and J may include at least one element selected from Mn, Ni, Co, Fe, Cr, V, Cu, Zn, Ti, Al, Mg and B.

The cathode active material may be mixed in a solvent to prepare a cathode slurry. The cathode slurry may be applied to at least one surface of the cathode current collector 105, then dried and pressed to prepare the cathode active material layer 110. The coating may include processes such as gravure coating, slot die coating, simultaneous multilayer die coating, imprinting, doctor blade coating, dip coating, bar coating or casting, etc. The cathode active material layer 110 may further include a binder, and optionally may further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, carbon nanotubes (CNTs), vapor-grown carbon fibers (VGCF), or carbon fibers; and/or metal-based conductive materials such as tin, tin oxide, and titanium oxide; as well as perovskite materials such as LaSrCoO₃, and LaSrMnO₃. These may be used alone or in combination of two or more thereof.

The cathode slurry may further include a thickener and/or a dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, nickel foil, stainless steel foil, titanium foil, nickel foam, copper foam, or a polymer substrate coated with a conductive metal. These may be used alone or in combination of two or more thereof. For example, the anode current collector 125 may have a thickness of 10 µm to 50 µm.

The anode active material layer 120 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may be used. These may be used alone or in combination of two or more thereof.

The amorphous carbon may include hard carbon, soft carbon, coke, mesocarbon microbead (MCMB), mesophase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal and/or lithium metal having a protective layer formed thereon for suppressing dendrite growth and the like. In one embodiment, a lithium metal-containing layer deposited or coated on the anode current collector 125 may also be used as the anode active material layer 120. In one embodiment, a lithium thin-film layer may also be used as the anode active material layer 120.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, SiOₓ (0<x<2), metal-doped SiOₓ (0<x<2), a silicon-carbon composite, etc.

The metal may include lithium and/or magnesium, and the metal-doped SiOₓ (0<x<2) may include a metal silicate.

The anode active material may be mixed in a solvent to prepare an anode slurry. The anode slurry may be coated or deposited on the anode current collector 125, and then dried and roll-pressed to prepare the anode active material layer 120. The coating may include processes such as gravure coating, slot die coating, simultaneous multilayer die coating, imprinting, doctor blade coating, dip coating, bar coating or casting, etc. The anode active material layer 120 may further include a binder, and optionally may further include a conductive material, a thickener or the like.

The solvent contained in the anode slurry may include water, purified water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder. These may be used alone or in combination of two or more thereof.

In exemplary embodiments, a separator 140 may be interposed between the cathode 100 and the anode 130. The separator 140 may be configured to prevent an electrical short-circuit between the cathode 100 and the anode 130, and to allow the flow of ions. For example, the separator may have a thickness of 10 µm to 20 µm.

For example, the separator 140 may include a porous polymer film or a porous nonwoven fabric.

The porous polymer film may include a polyolefin-based polymer such as an ethylene polymer, propylene polymer, ethylene/butene copolymer, ethylene/hexene copolymer, or ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with the electrolyte to define a lithium secondary battery.

As shown in FIGS. 1 and 2, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 to form electrode leads (a cathode lead 107 and an anode lead 127) that extend or are exposed to the outside of the case 160.

The lithium secondary battery may be manufactured, for example, in a cylindrical shape using a can, a prismatic shape, a pouch shape, a coin shape or the like.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

### Synthesis Example 1: Tetraphenyl[sulfonylbis(ethane-2,1-diyl)]bis(phosphonate) (Compound represented by Formula 2)

Divinyl sulfone (3.0 g, 25 mmol), diphenyl phosphite (12 g, 51 mmol), and toluene (33 mL) were introduced into a round-bottom flask, and the mixture was cooled to 0 °C. While maintaining 0 °C, 1,8-diazabicyclo[5.4.0]undec-7-ene (DBU, 0.77 g, 5 mmol) was added dropwise to the round-bottom flask over 1 hour, and the mixture was then stirred for 2 hours. Upon completion of the reaction, an excess amount of solid was produced, and stirring was stopped. Acetone (50 mL) was then added to reslurry the mixture. The resulting white solid was filtered, washed with methanol, and dried at high temperature to obtain 5.6 g of the product in solid form (the compound represented by Formula 2). The ₁H-NMR results thereof are as follows.

¹H-NMR(CDCl₃, 500MHz): 7.38-7.31(m, 8H), 7.25-7.20(m, 4H), 7.20-7.15(m, 8H), 3.47-3.41(m, 4H), 2.66-2.58(m, 4H)

### Synthesis Example 2: [Sulfonylbis(ethane-2,1-diyl)lbis(diphenylphosphine oxide) (Compound represented by Formula 3)

Divinyl sulfone (3.0 g, 25 mmol), diphenylphosphine oxide (10.4 g, 51 mmol), and toluene (20 mL) were introduced into a round-bottom flask, and the mixture was heated to 130 °C and stirred. While maintaining 130 °C, the mixture was stirred for 12 hours or more, and the temperature was then lowered to room temperature. The product solidified as it absorbed the solvent, and stirring was stopped. After stirring stopped, acetone (50 mL) was added to reslurry the mixture. The resulting white solid was filtered, washed with methanol, and dried at high temperature to obtain 11.4 g of the product in solid form (the compound represented by Formula 3). The 1H-NMR results thereof are as follows.

¹H-NMR(CDCl₃, 500MHz): 7.75-7.71(m, 8H), 7.52-7.51(m, 4H), 7.51-7.48(m, 8H), 3.28-3.12(m, 4H), 2.79-2.66(m, 4H)

**Example 1**

### (1) Preparation of Non-Aqueous Electrolyte

A 1.0 M LiPF₆ solution was prepared using a mixed solvent of EC/EMC (25:75; volume ratio). The compound represented by Formula 2 was added to the solution as an additive and mixed so that it reached a concentration of 0.5 wt% based on the total weight of the non-aqueous electrolyte.

As an auxiliary additive, 1.0 wt% fluoroethylene carbonate (FEC), 0.5 wt% 1,3-propane sultone (PS), and 0.5 wt% ethylene sulfate (ESA) (total 2.0 wt%) were added based on the total weight of the non-aqueous electrolyte and mixed to prepare the non-aqueous electrolyte.

### (2) Manufacture of Lithium Secondary Battery

Li[Ni_{0.8}Co_{0.1}Mn_{0.1}]O₂ as a cathode active material, carbon black as a conductive material, and polyvinylidene fluoride (PVdF) as a binder were mixed at a weight ratio of 92:5:3 to prepare a slurry. The slurry was uniformly applied to an aluminum foil having a thickness of 15 µm, and vacuum-dried at 130 °C to fabricate a cathode for a lithium secondary battery.

An anode slurry, which included 95 wt% of natural graphite as an anode active material, 1 wt% of Super-P as a conductive material, 2 wt% of styrene-butadiene rubber (SBR) as a binder, and 2 wt% of carboxymethyl cellulose (CMC) as a thickener, was prepared. The anode slurry was uniformly coated on a copper foil having a thickness of 15 µm, and then dried and roll-pressed to fabricate an anode.

The cathode and the anode fabricated as described above were each cut into a predetermined size and stacked. A separator (polyethylene, thickness: 20 µm) was interposed between the cathode and anode to form an electrode cell, and the tab portions of the cathode and the tab portions of the anode were respectively welded. The assembly of the welded cathode/separator/anode was placed into a pouch, and three sides of the pouch were sealed, leaving one side open for electrolyte injection. At this time, the portion having the electrode tab was included in the sealed part. After injecting the non-aqueous electrolyte prepared in (1) above through the electrolyte injection side, the remaining electrolyte injection side was also sealed, and the cell was allowed to be impregnated for 12 hours or more to manufacture a lithium secondary battery.

### Examples 2 to 17

Non-aqueous electrolytes and lithium secondary batteries were manufactured in the same manner as in Example 1, except that the content of the compound represented by Formula 2 or Formula 3 and the content of auxiliary additive based on the total weight of the non-aqueous electrolyte were varied as shown in Table 1 below.

### Comparative Example 1

A non-aqueous electrolyte and a lithium secondary battery were manufactured in the same manner as in Example 1, except that no additive was added.

### Comparative Example 2

A non-aqueous electrolyte and a lithium secondary battery were manufactured in the same manner as in Example 1, except that, as an additive, instead of the compound represented by Formula 2, divinyl sulfone and diphenyl phosphite as raw materials were each added in an amount of 0.5 wt% based on the total weight of the non-aqueous electrolyte and were simply mixed.

### Comparative Example 3

A non-aqueous electrolyte and a lithium secondary battery were manufactured in the same manner as in Example 1, except that, as an additive, instead of the compound represented by Formula 2, divinyl sulfone and diphenylphosphine oxide as raw materials were each added in an amount of 0.5 wt% based on the total weight of the non-aqueous electrolyte and were simply mixed.

The types and contents of the additives used in the examples and comparative examples, as well as the contents of the auxiliary additives, are shown in Table 1 below.

**[TABLE 1]**

| Division | Additive (wt%) | | Auxiliary Additive (wt%) | | | |
|---|---|---|---|---|---|---|
| | Type | Content | FEC | PS | ESA | Total |
| Example 1 | Formula 2 | 0.5 | 1.0 | 0.5 | 0.5 | 2.0 |
| Example 2 | Formula 2 | 0.3 | 1.0 | 0.5 | 0.5 | 2.0 |
| Example 3 | Formula 2 | 1.5 | 1.0 | 0.5 | 0.5 | 2.0 |
| Example 4 | Formula 2 | 3.2 | 1.0 | 0.5 | 0.5 | 2.0 |
| Example 5 | Formula 2 | 4.8 | 1.0 | 0.5 | 0.5 | 2.0 |
| Example 6 | Formula 2 | 0.08 | 1.0 | 0.5 | 0.5 | 2.0 |
| Example 7 | Formula 2 | 5.1 | 1.0 | 0.5 | 0.5 | 2.0 |
| Example 8 | Formula 2 | 0.3 | 1.0 | 0.7 | 0.5 | 2.2 |
| Example 9 | Formula 2 | 0.5 | 1.0 | 0.5 | 0.3 | 1.8 |
| Example 10 | Formula 2 | 0.5 | 2.5 | 1.0 | 0.6 | 4.1 |
| Example 11 | Formula 3 | 0.5 | 1.0 | 0.5 | 0.5 | 2.0 |
| Example 12 | Formula 3 | 0.3 | 1.0 | 0.5 | 0.5 | 2.0 |
| Example 13 | Formula 3 | 1.5 | 1.0 | 0.5 | 0.5 | 2.0 |
| Example 14 | Formula 3 | 3.2 | 1.0 | 0.5 | 0.5 | 2.0 |
| Example 15 | Formula 3 | 4.8 | 1.0 | 0.5 | 0.5 | 2.0 |
| Example 16 | Formula 3 | 0.08 | 1.0 | 0.5 | 0.5 | 2.0 |
| Example 17 | Formula 3 | 5.1 | 1.0 | 0.5 | 0.5 | 2.0 |
| Comparative Example 1 | - | - | 1.0 | 0.5 | 0.5 | 2.0 |
| Comparative Example 2 | Divinyl sulfone + Diphenyl phosphite | 1.0 | 1.0 | 0.5 | 0.5 | 2.0 |
| Comparative Example 3 | Divinyl sulfone + Diphenylphosphine oxide | 1.0 | 1.0 | 0.5 | 0.5 | 2.0 |

### Experimental Examples

### (1) Evaluation of Initial Performance

### 1) Evaluation of Initial Discharge Capacity

The lithium secondary batteries according to the examples and comparative examples described above were charged (CC/CV 1/3C, 4.2 V, 0.05C cut-off) and discharged (CC 1/3C, 2.5 V cut-off), and the initial discharge capacity was measured.

### 2) Evaluation of Discharge DCIR (Direct Current Internal Resistance)

From the point where the state of charge (SOC) of the lithium secondary batteries according to the examples and comparative examples described above was set to 60%, the C-rate was sequentially varied to 0.2C, 0.5C, 1.0C, 1.5C, 2.0C, 2.5C, and 3.0C. The terminal voltage points during 10 seconds of charge and discharge at each C-rate were plotted to construct a linear equation, and the slope of the resulting line was adopted as the direct current internal resistance (DCIR).

### (2) Evaluation of High-Temperature Storage Characteristics (60 °C)

The lithium secondary batteries according to the examples and comparative examples described above were stored in a 60 °C chamber for 11 weeks, after which the following evaluations were conducted.

### 1) Evaluation of Capacity Retention (60 °C)

The lithium secondary batteries were discharged (CC 1/3C, 2.5 V cut-off), and the discharge capacity was measured. The discharge capacity was divided by the initial discharge capacity measured in Experimental Example (1)1) to calculate the percentage.

The discharge capacity was measured in the same manner as in Experimental Example (1)1).

### 2) Evaluation of Discharge DCIR

The discharge DCIR was measured in the same manner as in Experimental Example (1)2).

### 3) Measurement of Alternative Current Internal Resistance (ACIR)

The ACIR was measured by contacting the terminals of a battery tester (BT3562A, HIOKI) with the cathode and anode tabs of the lithium secondary batteries according to the examples and comparative examples described above.

### (3) Evaluation of High-Temperature Lifetime Characteristics (45 °C)

The lithium secondary batteries according to the examples and comparative examples described above were subjected to 500 cycles of charging (CC/CV 1/3C 4.2 V, 0.05C cut-off) and discharging (CC 1/3C 2.5 V cut-off) in a 45 °C chamber, and the following evaluations were conducted.

### 1) Evaluation of Capacity Retention and Discharge Capacity (45 °C)

The discharge capacity was measured at the 500th discharge.

The capacity retention of the lithium secondary batteries was evaluated by dividing the discharge capacity measured at the 500th discharge by the initial discharge capacity measured in Experimental Example (1)1) and multiplying the result by 100.

### 2) Evaluation of Discharge DCIR

The discharge DCIR was measured in the same manner as in Experimental Example (1)2).

The evaluation results for the above-described experimental examples are shown in Tables 2 and 3.

**[TABLE 2]**

| Division | Initial performance evaluation | | Evaluation of high-temperature storage characteristics (60 °C), 11 weeks | | |
|---|---|---|---|---|---|
| | Initial discharge capacity (mAh) | DCIR (mΩ) | Capacity retention (%) | DCIR (mΩ) | ACIR (mΩ) |
| Example 1 | 1859 | 41.8 | 87 | 42.8 | 19.3 |
| Example 2 | 1855 | 42.2 | 86 | 43.2 | 19.4 |
| Example 3 | 1863 | 41.5 | 88 | 42.2 | 19.2 |
| Example 4 | 1868 | 40.8 | 89 | 42.0 | 19.1 |
| Example 5 | 1875 | 39.7 | 90 | 41.8 | 18.9 |
| Example 6 | 1790 | 45.8 | 83 | 46.2 | 19.5 |
| Example 7 | 1764 | 38.2 | 83 | 46.4 | 20.1 |
| Example 8 | 1871 | 39.8 | 87 | 44.7 | 19.3 |
| Example 9 | 1833 | 45.1 | 84 | 46.1 | 19.7 |
| Example 10 | 1872 | 38.5 | 84 | 43.5 | 19.9 |
| Example 11 | 1865 | 41.7 | 86 | 44.3 | 19.2 |
| Example 12 | 1877 | 42.0 | 84 | 42.7 | 19.5 |
| Example 13 | 1879 | 41.4 | 88 | 42.5 | 19.1 |
| Example 14 | 1885 | 40.5 | 89 | 42.3 | 18.9 |
| Example 15 | 1894 | 39.6 | 91 | 42.1 | 18.8 |
| Example 16 | 1756 | 45.2 | 83 | 46.5 | 19.9 |
| Example 17 | 1720 | 47.5 | 82 | 47.2 | 21.2 |
| Comparative Example 1 | 1842 | 40.1 | 75 | 54.1 | 23.8 |
| Comparative Example 2 | 1849 | 43.3 | 77 | 49.8 | 22.5 |
| Comparative Example 3 | 1859 | 43.6 | 78 | 48.7 | 22.2 |

**[TABLE 3]**

| Division | Evaluation of high-temperature cycle life characteristics (45 °C, 500 cycles) | | |
|---|---|---|---|
| | Discharge capacity (mAh) | Capacity retention (%) | DCIR (mΩ) |
| Example 1 | 1617 | 87 | 28.96 |
| Example 2 | 1632 | 88 | 30.31 |
| Example 3 | 1637 | 89 | 28.58 |
| Example 4 | 1645 | 90 | 28.23 |
| Example 5 | 1658 | 92 | 27.50 |
| Example 6 | 1590 | 85 | 31.14 |
| Example 7 | 1577 | 86 | 32.05 |
| Example 8 | 1609 | 86 | 30.66 |
| Example 9 | 1581 | 85 | 31.47 |
| Example 10 | 1594 | 85 | 32.03 |
| Example 11 | 1659 | 89 | 29.19 |
| Example 12 | 1614 | 86 | 28.25 |
| Example 13 | 1665 | 89 | 28.11 |
| Example 14 | 1672 | 90 | 28.01 |
| Example 15 | 1680 | 92 | 27.68 |
| Example 16 | 1583 | 85 | 31.01 |
| Example 17 | 1574 | 87 | 32.72 |
| Comparative Example 1 | 1547 | 78 | 35.02 |
| Comparative Example 2 | 1553 | 80 | 34.20 |
| Comparative Example 3 | 1580 | 81 | 34.61 |

Referring to Tables 2 and 3, the examples in which a sulfonyl compound containing a sulfonyl group and two phosphorus atoms was added as an additive exhibited overall improved initial performance, high-temperature storage characteristics, and high-temperature cycle life characteristics compared to the comparative examples.

In Examples 6, 7, 16, and 17, where the additive content was outside 0.1 wt% to 5 wt% based on the total weight of the non-aqueous electrolyte, the discharge capacity and capacity retention were relatively reduced, and the resistance increased, compared to the other examples.

In Examples 9 and 10, where the auxiliary additive content was outside 2 wt% to 4 wt% based on the total weight of the non-aqueous electrolyte, the discharge capacity and capacity retention were relatively reduced, and the resistance increased, compared to the other examples.

## Claims

1. A non-aqueous electrolyte comprising:
a non-aqueous organic solvent;
a lithium salt; and
an additive comprising a sulfonyl compound including a sulfonyl group and two phosphorus atoms within one molecule.

2. The non-aqueous electrolyte according to claim 1, wherein the sulfonyl compound comprises at least one selected from the group consisting of compounds represented by Formula 1 below: 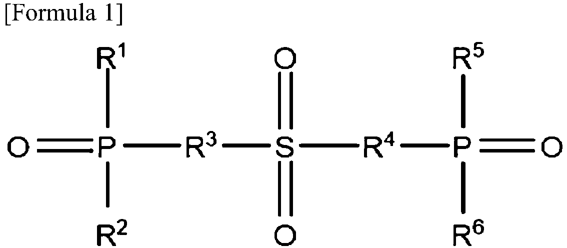
(in Formula 1, R¹, R², R⁵ and R⁶ are each independently a C₆-C₁₂ aryl group, a C₆-C₁₂ heteroaryl group, a phenoxy group, a heterophenoxy group, a C₁-C₆ alkyl group, a C₁-C₆ heteroalkyl group, a C₁-C₆ alkoxy group, a C₁-C₆ heteroalkoxy group, a C₅-C₁₂ cycloalkyl group, a C₅-C₁₂ cycloalkenyl group, a 5- to 7-membered heterocycloalkyl group, or a 5- to 7-membered heterocycloalkenyl group, and
R³ and R⁴ are each independently be a C₁-C₆ alkyl group, a C₂-C₆ alkenyl group, or a C₂-C₆ alkynyl group).

3. The non-aqueous electrolyte according to claim 2, wherein the sulfonyl compound comprises a compound represented by Formula 2 below:

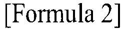

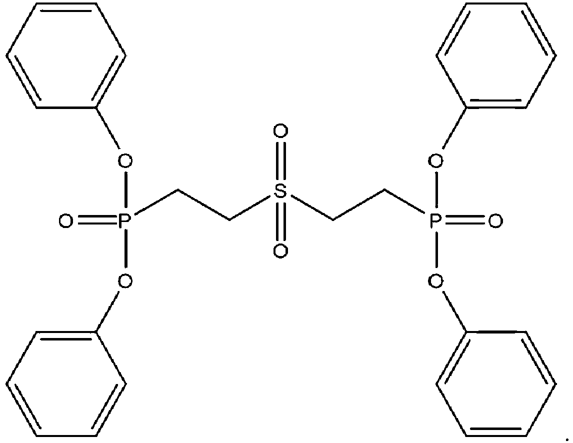

4. The non-aqueous electrolyte according to claim 2, wherein the sulfonyl compound comprises a compound represented by Formula 3 below:

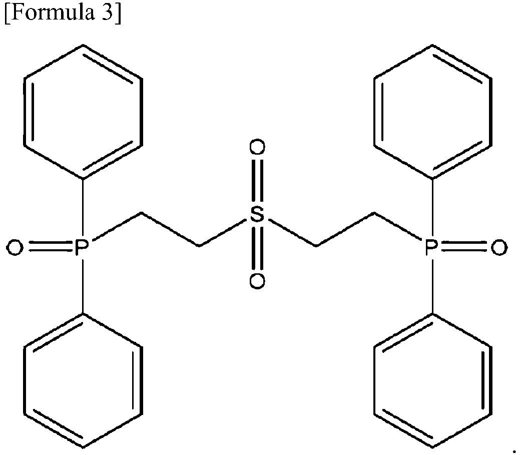

5. The non-aqueous electrolyte according to claim 1, wherein the content of the additive based on the total weight of the non-aqueous electrolyte is 0.1% by weight to 5.0% by weight.

6. The non-aqueous electrolyte according to claim 1, wherein the content of the additive based on the total weight of the non-aqueous electrolyte is 0.3% by weight to 0.8% by weight.

7. The non-aqueous electrolyte according to claim 1, further comprising an auxiliary additive including an alkyl sultone compound.

8. The non-aqueous electrolyte according to claim 7, wherein the content of the auxiliary additive based on the total weight of the non-aqueous electrolyte is 2% by weight to 4% by weight.

9. The non-aqueous electrolyte according to claim 1, wherein the non-aqueous organic solvent comprises at least one selected from the group consisting of ethylene carbonate, ethyl methyl carbonate, dimethyl carbonate, and diethyl carbonate.

10. The non-aqueous electrolyte according to claim 1, wherein the lithium salt comprises at least one selected from the group consisting of lithium tetrafluoroborate (LiBF₄), lithium hexafluorophosphate (LiPF₆), lithium bis(fluorosulfonyl)imide (LiFSI), and lithium bis(trifluoromethanesulfonyl)imide (LiTFSI).

11. A lithium secondary battery comprising:
a cathode;
an anode disposed opposite the cathode; and
the non-aqueous electrolyte according to claim 1.
